# EUROPEAN PATENT APPLICATION

(11) **EP 1 630 580 A1**
(43) Date of publication of application: **01.03.2006**
(21) Application number: 04735359.4
(22) Date of filing: 28.05.2004
(51) Int. Cl.: G02B 7/04

(54) **IMAGING DEVICE, MOBILE TERMINAL HAVING THE SAME, AND IMAGING DEVICE ASSEMBLING METHOD**

(30) Priority: 30.05.2003 JP 2003154233
(71) Applicant: Konica Minolta Opto, Inc., Hachioji-shi, Tokyo 192-8505 (JP)
(72) Inventor: UESAKA, Takeshi, C/o Konica Minolta Opto, Inc., Hachioji-shi, Tokyo 1928505 (JP)
(74) Representative: Henkel, Feiler & Hänzel
(86) International application number: PCT/JP2004/007755
(87) International publication number: WO 2004/107007

(57) **Abstract**

There is provided an imaging apparatus having a simple configuration not causing a posture difference and capable of accurate positioning in the optical axis direction of an imaging element and an imaging optical system, coping with an increase of the number of pixels of the imaging element, and performing micro-photographing. The imaging apparatus includes: an imaging element (8); a pedestal (6) having a unitary leg portion brought into abutment with the imaging element; an imaging optical system (50) having an abutment portion brought into abutment with the pedestal and guiding object light to an imaging region of the imaging element; an external frame member (12) for containing the imaging optical system; and an elastic member (9) arranged to urge the imaging optical system (50) and the pedestal (6) toward the imaging element (8). When the pedestal (6) or the imaging optical system (50) is rotated via a cam surface made of a plurality of inclined planes or inclined planes and horizontal planes formed at least on one of the abutment surfaces of the pedestal (6) and the imaging optical system (50), the imaging optical system (50) is moved along the optical axis.

## Description

### Technical Field:

The present invention relates to focal point adjustment of an imaging apparatus and, more particularly, to a focal point adjustment mechanism which is suitable for close-up photographing using an imaging apparatus incorporated in a mobile terminal.

### Background Art:

A compact, flat imaging apparatus has been recently mounted in a compact, flat electronic device such as a mobile cellular phone set or personal computer. This allows transmission of voice information as well as image information to and from a remote location.

In an imaging apparatus incorporated in such a mobile terminal, the focal length of an imaging optical system is very short, and the F-number is as small as about 2 to 4. The depth of focus on the image side is accordingly very small, and positioning of the imaging optical system with respect to an imaging surface along the optical axis requires a strict accuracy. For this reason, various proposals have been made regarding a method of setting the position of the imaging optical system of the imaging apparatus.

For example, in order to make focal point adjustment unnecessary during assembling an imaging apparatus, an arrangement is disclosed (e.g., patent reference 1: Japanese Unexamined Patent Publication No. 2002-325193) in which a leg portion integrally formed with an optical member is brought into abutment with an imaging element. The optical member is biased by an elastic member toward the imaging element to position the imaging element and optical member along the optical axis.

Another arrangement is disclosed (e.g., patent reference 2: Japanese Unexamined Patent Publication No. 2002-082271) in which projections and inclined grooves are formed on a photographing lens and in a cylindrical holder respectively. The photographing lens is pivoted to move it along the optical axis so as to perform focal point adjustment during assembly. Close-up photographing is enabled by using this adjustment mechanism.

As the mobile terminal described above becomes popular, an imaging apparatus to be mounted in the mobile terminal needs a high image quality and to be multifunctional. An imaging apparatus on which an imaging element having a large number of pixels can be mounted and which can perform close-up photographing (macro-photographing) is sought for.

To realize the high image quality, an imaging element having a large number of pixels is used. To improve the resolution of the imaging optical system accordingly, a plurality of optical members are employed. Optical members must be positioned with respect to each other, and an imaging optical system which is formed of the optical members must be accurately positioned along the optical axis with respect to the imaging element.

To realize macro-photographing, the moving amount of the imaging optical system along the optical axis with respect to the imaging surface and the set position of the imaging optical system are required to have very strict accuracies in the same manner as described above.

Regarding the above demands, in the imaging apparatus described in patent reference 1, positioning of the imaging element and optical element does not require an adjusting step. Although the method of patent reference 1 is simple and effective, it does not move the imaging optical system toward the object.

Assume that projections and inclined grooves are to be formed to be movable relative to each other, as in the imaging apparatus described in patent reference 2. The inclined grooves must inevitably have a clearance with respect to the sizes and shapes of the projections. When the imaging apparatus faces up, the projections abut against the lower portions of the inclined grooves. When the imaging apparatus faces down, the projections abut against the upper portions of the inclined grooves. Then, the focal point is shifted by an amount corresponding to the clearance, posing a problem in a posture difference.

The present invention has been made in view of the above problems, and has as its aim to provide an imaging apparatus which has a simple configuration, does not cause a posture difference, can accurately position in the optical axis direction an imaging element and imaging optical system, can cope with an increase of the number of pixels of the imaging element, and can perform macro-photographing, a mobile terminal having the imaging apparatus, and an imaging apparatus assembling method.

### Disclosure of Invention:

In order to achieve the above aim, according to the first aspect of the present invention, there is provided an imaging apparatus characterized by comprising an imaging element, a pedestal integrally having a leg portion which abuts against the imaging element, an imaging optical system which has an abutting portion to abut against the pedestal and guides object light to an imaging region of the imaging element, an external frame member which contains the imaging optical system, and an elastic member, wherein the elastic member is arranged to bias the imaging optical system and pedestal toward the imaging element, and when any one of the pedestal and imaging optical system is pivoted via a cam surface comprising a plurality of inclined planes, or inclined planes and horizontal planes, formed on a surface of at least one of the pedestal and imaging optical system at the abutting portion, the imaging optical system is moved along an optical axis.

According to the second aspect of the present invention, there is provided an imaging apparatus characterized by comprising an imaging element, a pedestal integrally having a leg portion which abuts against the imaging element, an imaging optical system which has an abutting portion to abut against the pedestal and guides object light to an imaging region of the imaging element, an external frame member which contains the imaging optical system, and an elastic member which biases the imaging optical system toward the imaging element, wherein the pedestal constitutes at least part of the external frame member, and when the imaging optical system is pivoted via a cam surface comprising an inclined plane, or an inclined plane and horizontal plane, formed on a surface of at least one of the pedestal and imaging optical system at an abutting portion, the imaging optical system is moved along an optical axis.

According to the third aspect of the present invention, there is provided an imaging apparatus characterized by comprising an imaging element, a pedestal integrally having a leg portion which abuts against the imaging element, an imaging optical system which has an abutting portion to abut against the pedestal and guides object light to an imaging region of the imaging element, an external frame member which contains the imaging optical system, and an elastic member, wherein the elastic member is arranged to bias the imaging optical system and pedestal toward the imaging element, and the pedestal is formed such that when the imaging optical system is pivoted via a cam surface comprising a plurality of steps formed on a surface of the pedestal on a side of an abutting portion with respect to the imaging optical system, and an inclined plane formed on an inner surface of the external frame member at a position to correspond to the step, the imaging optical system is moved along an optical axis.

According to the fourth aspect of the present invention, there is provided an imaging apparatus assembling method comprising the steps of fixing an external frame member to a board having an imaging element, fitting a pedestal in the external frame member, placing an imaging optical system on the pedestal, placing an elastic member on an imaging optical system, and fixing a lid member to the external frame member while urging the other end of the elastic member.

As is apparent from the above aspects, according to the present invention, the imaging optical system and pedestal are biased by the elastic member toward the imaging element. Thus, there is provided an imaging apparatus which has a simple configuration, does not cause a posture difference, can position an imaging element and imaging optical system relative to each other, copes with an increase of the number of pixels of the imaging element, and can perform macro-photographing, and a mobile terminal having the imaging apparatus.

In addition, as the respective components are sequentially placed from one direction, automatic assembly using a machine can be employed easily, so that an imaging apparatus assembling method that can enable cost reduction is provided.

The above and many other aims, features and advantages of the present invention will become manifest to those skilled in the art upon making reference to the following detailed description and accompanying drawings in which preferred embodiments incorporating the principle of the present invention are shown by way of illustrative

### examples.

### Brief Description of Drawings:

Figs. 1A and 1B are front views respectively showing the obverse and reverse appearances of a mobile cellular phone set as an example of a mobile terminal which incorporates an imaging apparatus according to the present invention;
Fig. 2 is a perspective view showing an imaging apparatus according to the first embodiment of the present invention;
Fig. 3 is a sectional view taken along an imaginary plane III of the imaging apparatus shown in Fig. 2;
Fig. 4 is a developed front view showing an example of cam surfaces formed on a pedestal of the first embodiment;
Fig. 5 is an exploded perspective view showing the assembling procedure of the imaging apparatus;
Fig. 6 corresponds to Fig. 3 and is a sectional view showing a modification of the imaging apparatus according to the first embodiment of the present invention;
Fig. 7 corresponds to Fig. 3 and is a sectional view of an imaging apparatus according to the second embodiment of the present invention;
Fig. 8 is a developed front view showing the shapes of cam surfaces formed on a pedestal of the third embodiment;
Fig. 9 is a perspective view showing a pair of steps of the pedestal of the third embodiment and the shape of an external frame member which is located at a position to correspond to the pair of steps; and
Figs. 10A and 10B are respectively sectional views showing the shapes of two types of compression coil springs to be applied to the imaging apparatus of the present invention.

### Best Mode of Carrying Out the Invention:

Several preferred embodiments concerning the best mode of the present invention will be described hereinafter with reference to the accompanying drawings. Note that the present invention will not be limited to these embodiments.

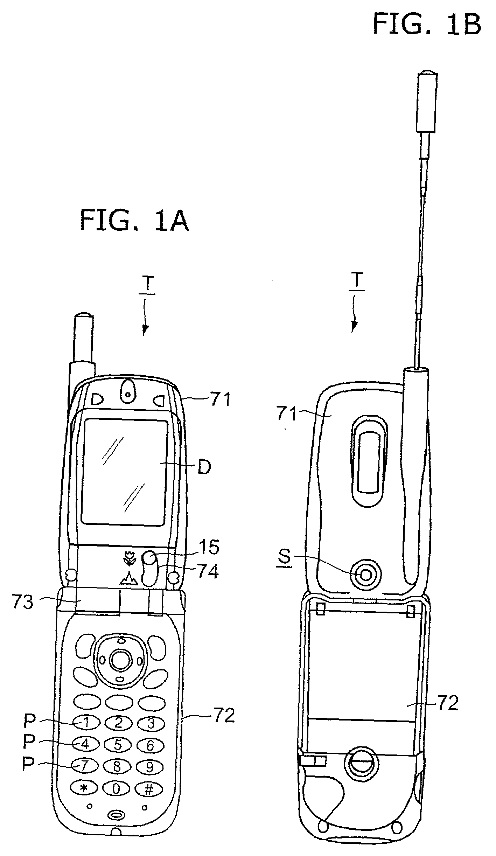

Figs. 1A and 1B are front views respectively showing the obverse and reverse appearances of a mobile cellular phone set T as an example of a mobile terminal which incorporates an imaging apparatus according to the present invention.

The mobile cellular phone set T shown in Figs. 1A and 1B is a folding mobile cellular phone set in which an upper case 71 serving as a case having a display screen D and a lower case 72 having a plurality of operation buttons P are connected to each other through a hinge 73. An imaging apparatus S is incorporated in the upper case 71 below the display screen D. The imaging apparatus S is arranged such that it can receive light from the outer surface of the upper case 71.

An arcuate opening 74 is formed in the upper case 71 below the display screen D to expose an operation member 15 through it. When the operation member 15 is moved within the opening 74 upward in Fig. 1A, the focal position for macro-photographing is set.

The imaging apparatus may be arranged in the upper case 71 above the display screen D or on the side surface of the upper case 71. The same applies to the position of the operation member 15. Naturally, the mobile cellular phone set is not limited to of a folding type.

### (First Embodiment)

An imaging apparatus according to the first embodiment of the present invention will be described hereinafter.

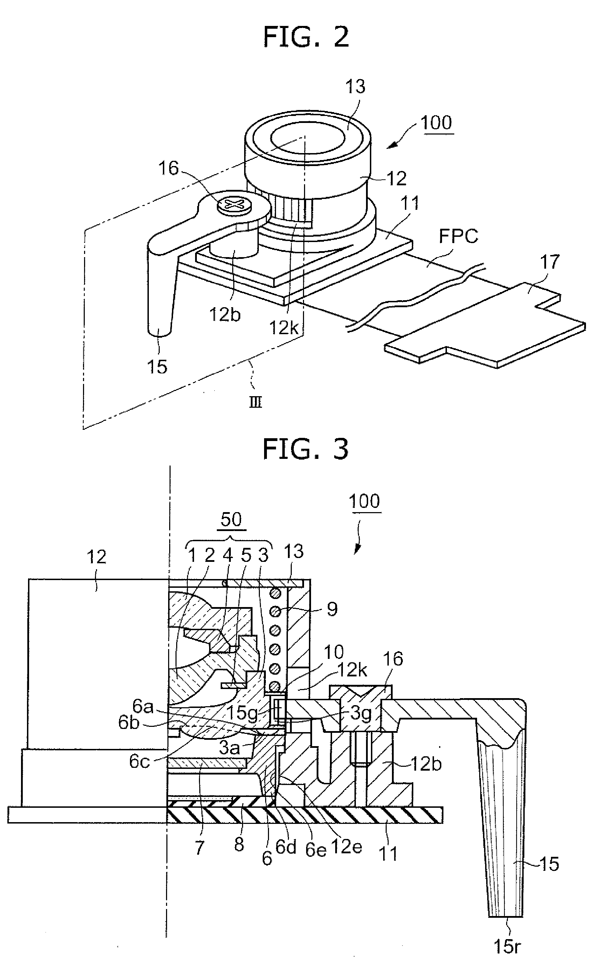

Fig. 2 is a perspective view of an imaging apparatus 100 according to the first embodiment of the present invention. The imaging apparatus 100 of Fig. 2 corresponds to the imaging apparatus S of each of Figs. 1A and 1B.

As shown in Fig. 2, the imaging apparatus 100 comprises a printed board 11 having a side where an imaging element is mounted, a connection board 17 for connection to another control board of the mobile terminal, a flexible printed circuit FPC which connects the printed board 11 to the connection board 17, a cylindrical external frame member 12 which contains an imaging optical system or the like and has an opening 12k in its side surface, a lid member 13 which is fixed to the upper surface of the external frame member 12, an operation member 15 which is pivotally attached on a boss 12b integrally formed on the external frame member 12, and a stepped screw 16 which pivotally fixes the operation member 15. One end side of the operation member 15 located on the outer surface side of the external frame member 12 has a disk-like shape, and a gear portion 15g is formed on the outer edge portion of the disk-like portion of the operation member 15.

Fig. 3 is a sectional view taken along an imaginary plane III of the imaging apparatus 100 shown in Fig. 2. As shown in Fig. 3, an imaging optical system 50 having a first lens 1, an aperture diaphragm 14 which determines the aperture F value of the imaging optical system, a second lens 2, a stationary diaphragm 5 for shielding non-required light, and a third lens 3, a pedestal 6, an infrared cut filter 7, an imaging element 8 mounted on the printed board 11, a compression coil spring 9 serving as an elastic member, a washer 10 of the compression coil spring 9, and the lid member 13 are arranged in the cylindrical external frame member 12 from the object side. The lid member 13 is fixed to the upper portion of the external frame member 12.

Referring to Fig. 3, the pedestal 6 according to the present invention has a ring-like shape, and a leg portion 6d which abuts against the upper surface of the imaging element 8 is formed on the pedestal 6 on the imaging element 8 side. Horizontal planes 6a and 6b having different heights, and an inclined plane 6c which continuously connects the horizontal planes are formed on the pedestal 6 on the imaging optical system 50 side at an interval of substantially 120°. These planes will be referred to as cam surfaces hereinafter. Concaves 6e are formed in the side surface of the pedestal 6. A convex 12e is formed at least at one portion on the inner surface of the external frame member 12 which corresponds to the outer surface of the pedestal 6, to fit in the concave 6e formed at one portion in the outer surface of the pedestal 6 so as to position the pedestal 6 and prohibit pivot motion of the pedestal 6.

As shown in Fig. 3, the imaging optical system 50 is formed into a unit by abutting the first lens 1, second lens 2, and third lens 3 against each other at a flange other than the optical effective surface and fixing them to each other with an adhesive or the like. As the imaging optical system 50 is formed without interposing any other member, it can be assembled without any error in the gaps among the lenses.

Projections 3a are formed at an interval of substantially 120° on the third lens 3, which forms the imaging optical system 50, on the imaging element 8 side to correspond to the cam surfaces formed on the pedestal 6. The third lens 3 abuts against the cam surfaces of the pedestal 6 through the projections 3a. A gear portion 3g is formed on the outer surface of that side portion of the third lens 3 which corresponds to an opening 12k of the external frame member 12.

Furthermore, the washer 10 is arranged on the flange on the lid member 13 side of the third lens 3, and the compression coil spring 9 is elastically provided between the lid member 13 and washer 10. The imaging optical system 50 and pedestal 6 are constantly biased toward the imaging element 8 by the elastic operation of the compression coil spring 9.

The gear portion 15g formed on one end portion of the operation member 15 which can be pivoted by the stepped screw 16 is arranged to mesh with the gear portion 3g of the third lens 3. The other end portion (proximal end portion) 15r of the operation member 15 which is exposed from the opening 74 of the mobile terminal T shown in Fig. 1A is the portion which is to be operated by the user.

The operation, function, and effect of the imaging apparatus 100 having the above arrangement will be described.

When the user operates the distal end portion 15r of the operation member 15, the operation member 15 pivots about the stepped screw 16 as the center, so as to pivot the third lens 3 through the gear portion 3g of the third lens 3 which meshes with the gear portion 15g. Hence, the projections 3a, arranged at the interval of substantially 120°, of the third lens 3 move from the horizontal plane 6a, of the cam surfaces arranged on the pedestal 6 at the interval of substantially 120°, to the horizontal plane 6b spaced apart from the imaging element 8, via the inclined plane 6c. Thus, the imaging optical system 50 moves for a predetermined amount (a distance corresponding to the step between the horizontal planes 6a and 6b) along the optical axis and is set at the position of a focal length appropriate for short-distance photographing.

At this time, the compression coil spring 9 which serves as an elastic member according to the present invention constantly biases the imaging optical system 50 and the pedestal 6, which abuts against the imaging optical system 50, toward the imaging element. Thus, in whatever posture the imaging optical system 50 may be, the gap from the imaging element 8 to the imaging optical system 50 can always be maintained constant without inclination. Hence, according to the present invention, an imaging apparatus can be obtained which can perform macro-photographing and in which the problem of posture difference is solved.

The imaging optical system 50 is stably held in the external frame member 12 through the compression coil spring 9. Even when an impact or external pressure acts on the external frame member 12 when transporting the imaging apparatus 100 or building the imaging apparatus 100 into a mobile terminal, the force will not be directly transmitted to the internal imaging optical system 50 or pedestal 6. Thus, a highly reliable imaging apparatus can be provided in which the imaging optical system 50 as the major portion and the pedestal 6 are free from deformation.

The pivotal motion of the distal end portion 15r of the operation member 15 is regulated by the opening 74 of the mobile terminal T. Even when a large operational force acts on the distal end portion 15r, it is received by the opening 74 and is not transmitted to the imaging optical system 50. Thus, an almost trouble-free structure can be obtained.

Furthermore, the leg portion 6d of the pedestal 6 abuts against the imaging element 8 at a portion outside the light-receiving surface. When the infrared cut filter 7 is arranged on the pedestal, the light-receiving surface side of the imaging element 8 can be surrounded. Externally entering dust and dust which is generated by the operation can be prevented from attaching to the light-receiving surface.

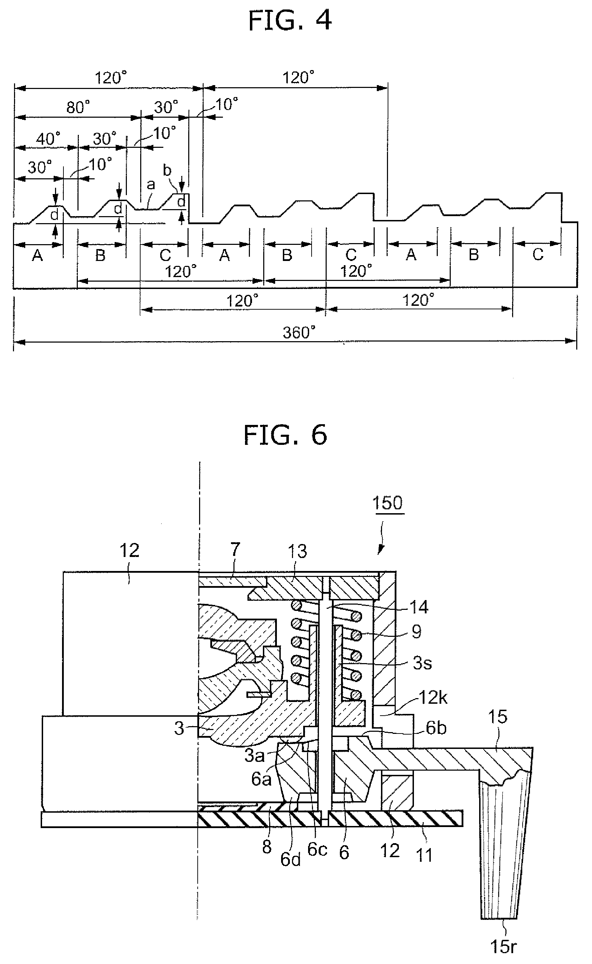

Fig. 4 is a view showing an example of cam surfaces formed on the pedestal 6. Fig. 4 is a developed front view (cam diagram) of the cam surfaces which form a ring-like shape through 360°. Note that the cam diagram shown in Fig. 4 is exaggerated in the direction of height.

As shown in Fig. 4, three types of cam shapes, i.e., one defined by a region A, one defined by a region B, and one defined by a region C, are formed for every 120°. The cam shapes A, B, and C are formed such that their horizontal planes have different heights while the height difference (denoted by d) between a pair of horizontal planes is the same. The use region of each of the cam shapes A, B, and C is substantially 30°, and non-use regions of 1.0° are disposed among the respective cam shapes. When these cam surfaces are used in the imaging apparatus shown in Fig. 3, the pivot angle of the imaging optical system 50 is set to slightly less than 30°.

The imaging optical system 50 is assembled in the following manner. That is, of the three types of cam shapes described above, if the distance from the final surface to the focal position of the imaging optical system 50 falls within the vicinity of a designed value, the projections 3a of the third lens 3 abut against the cam shapes B. If the distance from the final surface to the focal point of the imaging optical system 50 is smaller than the designed value, the projections 3a of the third lens 3 abut against the cam shapes A. If the distance from the final surface to the focal position of the imaging optical system 50 is longer than the designed value, the projections 3a of the third lens 3 abut against the cam shapes C.

The distance from the final surface to the focal position of the imaging optical system 50 may be measured for each imaging optical system and cam surfaces that match the measured distance may be selected. Alternatively, the distance may be set for each lot as a unit.

In the pedestal 6 on which the cam surfaces are formed, at least three concaves 6e are formed at an angular interval of 40°. When a concave that fits on the convex 12e of the external frame member 12 is selected, cam shapes that abut against the projections 3a of the third lens 3 can be selected.

More specifically, when the concave is fitted on the convex after selecting the phase in the circumferential direction of the pedestal 6 with respect to the external frame member 12, the cam shapes to be used in accordance with variations in focal position of the imaging optical system 50 which has been assembled in advance are selected. Thus, variations in distance of the object which is in focus in ordinary-distance photographing and macro-photographing are eliminated.

Although a cam surface condition having the three types of cam shapes formed on the pedestal 6 is described in the above embodiment, the number of types of the cam shapes are not limited to three. The pivot angle of the imaging optical system 50 is appropriately set in accordance with the cam shapes.

How to assemble the imaging apparatus 100 having the above arrangement will be described hereinafter.

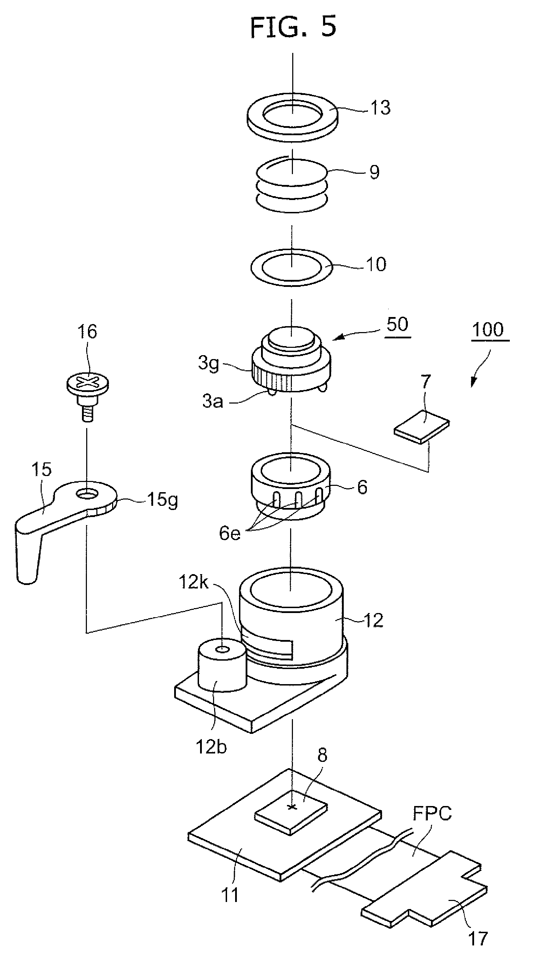

Fig. 5 is an exploded perspective view showing the assembling procedure of the imaging apparatus 100 according to the present invention. In Fig. 5, for simplifying the description, the same functional members as those in Figs. 2 and 3 are denoted by the same reference numerals and are described.
(1) First, a printed board unit is prepared in which a printed board 11 where an imaging element 8 is mounted is connected to a connection board 17 for connection with another control board of the mobile terminal through a flexible printed circuit FPC at a predetermined position.
(2) Subsequently, an external frame member 12 is fixed on the printed board 11. The external frame member 12 is positioned, and the printed board 11 and external frame member 12 are fixed to each other with an adhesive. This positioning is accurately performed by image-recognizing the position of the imaging element 8 by, e.g., a camera prepared as a process jig and placing the external frame member 12 at a predetermined position with respect to the image-recognized imaging element 8. If a high accuracy is not required, positioning may be performed by fitting a boss formed on the external frame member 12 in a positioning hole formed in the printed board 11, although not shown.
(3) Then, a pedestal 6 into which an infrared cut filter 7 has been built in advance is fitted in the external frame member 12. At this time, the pedestal 6 is built into the external frame member 12 such that a convex 12e (see Fig. 3) formed in the inner surface of the external frame member 12 fits in, of the concaves 6e at three locations, a concave at one predetermined location. When selecting either one of the concaves 6e at the three locations, the selection is determined on the basis of a result obtained by measuring an imaging optical system 50 in advance as described above.
(4) The imaging optical system 50 which has been assembled as a unit in advance is placed on the cam surfaces of the pedestal 6. At this time, projections 3a at three locations formed on the third lens fall on predetermined positions on the cam surfaces, and the imaging optical system 50 is built such that a gear portion 3g faces an opening 12k of the external frame member 12.
(5) A washer 10 is placed on the flange of the third lens of the imaging optical system 50.
(6) One end of an elastic member 9 is placed on the washer. The elastic member 9 is placed on the imaging optical system 50 through the washer 10.
(7) While pressing the other end of the elastic member 9, a lid member 13 is fixed to the external frame member 12 and attached to it. This attaching is performed using an adhesive or the like.
(8) An operation member 15 is attached to a boss 12b of the external frame member 12. In this attaching, a gear portion 15g formed on the operation member 15 is meshed with the gear portion 3g formed on the third lens such that a predetermined tooth meshes with a predetermined tooth. After that, the operation member 15 is pivotally attached to the external frame member 12 through a stepped screw 16.

So far an imaging apparatus assembling method has been described. As the respective components are sequentially placed from one direction, automatic assembly using a machine can be employed easily. Consequently, the cost can be reduced, and a change in production number can be coped with quickly.

In the first embodiment described above, an arrangement is described in which the cam surfaces are formed on the pedestal 6 and the projections 3a are formed on the imaging optical system 50 side. However, the present invention is not limited to this. An arrangement may be employed in which projections are formed on the pedestal 6 and cam surfaces are formed on the imaging optical system. Alternatively, an arrangement may be employed in which cam surfaces are formed on both the pedestal 6 and the imaging optical system. In the first embodiment, the pedestal 6 is non-pivotal while the imaging optical system 50 is pivotal. However, the present invention is not limited to this. Conversely, the imaging optical system 50 may be non-pivotal while the pedestal 6 is pivotal. Although the cam surfaces have been described which have cam shapes obtained by connecting horizontal planes having different heights through inclined planes, the cam surfaces can naturally be formed of only inclined planes.

A modification to the first embodiment will be described.

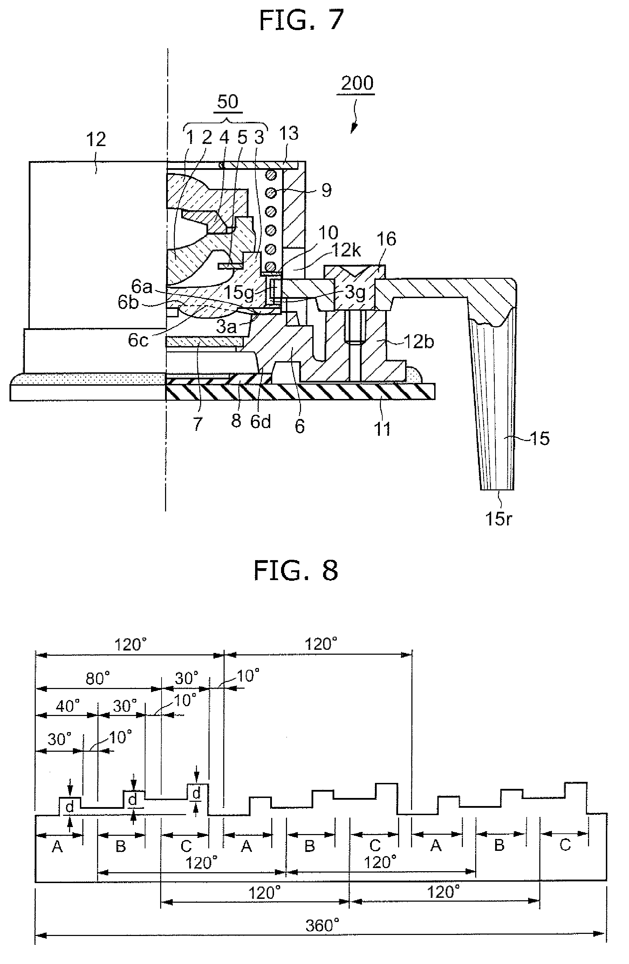

Fig. 6 is a sectional view showing a structure concerning a modification to the first embodiment shown in Fig. 3. This modification shows the arrangement of an imaging apparatus according to another aspect in which the idea of the arrangement of the imaging apparatus shown in FIG. 3 is employed unchanged.

In an imaging apparatus 150 shown in Fig. 6, a pedestal and elastic member are arranged not around an imaging optical system but on one side of the imaging optical system. In order to simplify the description, in Fig. 6, even members having different shapes are denoted by the same reference numerals if they have the same functions as those of the corresponding members shown in Fig. 3.

In the imaging apparatus 150, an external frame member 12 having an opening 12k, and a shaft 14 are attached to a printed board 11 on which an imaging element 8 is mounted. A pedestal 6 having cam surfaces 6a, 6b, and 6c on its one surface is attached to the imaging apparatus 150 to be pivotal about the shaft 14, which is arranged in one side of the external frame member 12, as the axis. The other surface 6d of the pedestal 6 abuts against the imaging element 8. The pedestal 6 is integral with an operation member 15, and its distal end portion 15r is exposed from an opening 74 shown in Fig. 1. A third lens 3 is fitted on the shaft 14 through a guide cylinder 3s. Projections 3a formed on the lower surface of the third lens 3 are abutted against the cam surfaces. The third lens 3 is not pivotal due to a rotation preventive member (not shown) and is movable only along the optical axis. A compression coil spring 9 serving as an elastic member is arranged around the guide cylinder 3s. When the other end of the shaft 14 is fixed by a lid member 13 attached with an infrared cut filter 7, an imaging optical system 50 including the third lens 3, and the pedestal 6 are constantly biased by the compression coil spring 9 toward the imaging element 8.

When user operates the distal end portion 15r, the pedestal 6 of the imaging apparatus 150 pivots about the shaft 14 as the axis. The projections 3a of the third lens 3 then abut against the cam surfaces of the pedestal 6 from the surface 6a to the surface 6b via the surface 6c, to move the imaging optical system 50 toward the object by a distance corresponding to the height differences of the cam surfaces. Hence, macro-photographing becomes possible.

In this case, while the projections 3a must be formed unitarily with the third lens 3, the guide cylinder 3s can be made as a separate component.

To eliminate variations in focal position in the imaging optical system, the cam surfaces of the pedestal 6 may be prepared to have various heights, and selectively used appropriately to match the imaging optical system.

In this case, in whatever posture the imaging optical system 50 may be, the gap from the imaging element 8 to the imaging optical system 50 can always be maintained constant without inclination. Hence, an imaging apparatus can be obtained which can perform macro-photographing and in which the problem of posture difference is solved.

### (Second Embodiment)

An imaging apparatus 200 according to the second embodiment of the present invention will be described hereinafter with reference to Fig. 7.

Fig. 7 corresponds to Fig. 3 and is a sectional view of the imaging apparatus 20 according to the second embodiment of the present invention. The imaging apparatus 200 corresponds to the imaging apparatus S of Fig. 1. In Fig. 7, for simplifying the description, members having the same functions as those in Fig. 3 are denoted by the same reference numerals.

The imaging apparatus 200 comprises, from the object side, the imaging optical system 50 including a first lens 1, an aperture diaphragm 4 which determines the aperture F value of the imaging optical system 50, a second lens 2, a stationary diaphragm 5 for shielding non-required light, and a third lens 3, a pedestal 6, an infrared cut filter 7, an imaging element 8 mounted on the printed board 11, a compression coil spring 9 serving as an elastic member, a washer 10, a compression coil spring 9 serving as an elastic member, an external frame member 12, and a lid member 13 for the external frame member 12.

Referring to Fig. 7, the pedestal 6 according to the present invention has a leg portion 6d which abuts against the imaging element 8 on the image surface side. Horizontal planes 6a and 6b having different heights, and an inclined plane 6c which continuously connects the horizontal planes are formed on the imaging optical system 50 side at an interval of substantially 120°. These planes 6a, 6b, and 6c will be referred to as cam surfaces hereinafter.

According to the second embodiment, as shown in Fig. 7, the pedestal 6 including a boss 12b, on which an operation member 15 is to be pivotally attached, is integrally formed as part of the external frame member 12. The pedestal 6 is made of a light-shielding material. That portion of the pedestal 6 which is located above the imaging element 8 forms an opening. The infrared cut filter 7 is attached to this opening.

The pedestal 6 is formed such that the leg portion 6d abuts against the imaging element 8 while the remaining portion forms a small gap with respect to the printed board 11. When attaching the pedestal 6 to the printed board 11, a hole (not shown) formed in the printed board 11 is fitted with a boss (not shown) formed on the pedestal 6, thus positioning the pedestal 6. After that, the pedestal 6 is fixed to the printed board 11 with an adhesive or the like.

The imaging apparatus 200 is assembled in substantially the same manner as in the first embodiment. After the pedestal 6 is fixed, the imaging apparatus 50 is placed and the washer 10 and compression coil spring 9 are built into the imaging apparatus 200. Then, the lid member 13 having an opening 12k is placed on the imaging apparatus 200.

Except for this, the names, functions, and operations of the respective portions of the imaging apparatus 200 are completely the same as those of the imaging apparatus 100 (see Fig. 3) according to the first embodiment, and a description thereof will accordingly be omitted.

With this arrangement, an imaging apparatus can be obtained which can perform macro-photographing while the problem of posture difference is solved. As the number of components can be decreased more than in the imaging apparatus 100, further cost reduction is possible.

An arrangement has been described in which the cam surfaces are formed on the pedestal 6 and projections are formed on the third lens 3 of the imaging optical system 50. However, the present invention is not limited to this. For example, projections may be formed on the pedestal 6, and cam surfaces may be formed on the lower surface of the third lens. Alternatively, cam surfaces may be formed on both the pedestal 6 and the lower surface of the third lens. While the cam surfaces are different-height horizontal surfaces which are connected by inclined planes, the cam surfaces may naturally be formed of only inclined planes.

### (Third Embodiment)

An imaging apparatus according to the third embodiment of the present invention will be described hereinafter.

The arrangement of the main components of the imaging apparatus according to the third embodiment is the same as that of the imaging apparatus 100 according to the first embodiment shown in Fig. 3. Portions that are different from their counterparts of the first embodiment will be described with reference to Fig. 3.

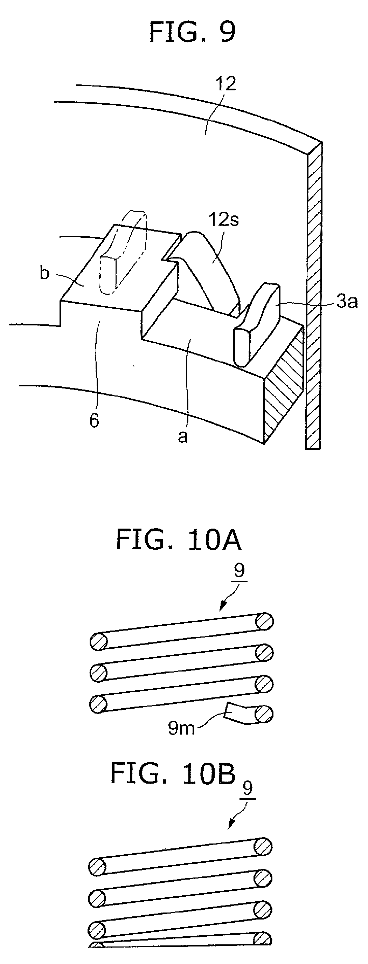

The imaging apparatus according to the third embodiment of the present invention is different from its counterpart in the shapes of the cam surfaces of the pedestal 6 and the shape of the external frame member 12 (both are shown in Fig. 3) which faces the pedestal. These different portions will be described in detail with reference to Figs. 8 and 9.

Fig. 8 is a developed view (cam diagram) showing the shapes of ring-like cam surfaces which are formed on a pedestal 6 according to the third embodiment. Note that the cam diagram is exaggerated in the direction of height.

As shown in Fig. 8, on the cam surfaces, three types of cam shapes, i.e., one defined by a region A, one defined by a region B, and one defined by a region C, are formed for every 120°.

The cam shapes A, B, and C are formed such that their horizontal planes have different heights while the height difference (denoted by d) between a pair of horizontal planes is the same. The use region of each of the cam shapes A, B, and C is substantially 30°, and non-use regions of 10° are disposed among the respective cam shapes. When these cam surfaces are used in the imaging apparatus shown in Fig. 3, the pivot angle of an imaging optical system 50 is set to less than 30°.

Fig. 9 is a perspective view showing the pair of cam shapes formed on the pedestal 6 and the shape of an external frame member at a position corresponding to the pair of cam shapes.

As shown in Fig. 9, the pedestal 6 has a notch at a portion corresponding to a step formed by a pair of low horizontal plane a and high horizontal plane b. A hill-shaped inclined plane 12s is formed, at a position corresponding to the notch, on the inner surface of the external frame member 12 to connect the horizontal surfaces a and b. Reference numeral 3a denotes a projection formed on the third lens.

The operation of the third embodiment having the above arrangement will be described.

When the operation member 15 shown in Fig. 3 is pivoted, the third lens meshing with it pivots. At this time, a projection 3a integrally formed with the third lens is moved to the left on the step in Fig. 9. When the projection 3a reaches the inclined plane 12s, it is lifted along the inclination and stopped on the horizontal plane b (indicated by a broken line) at a position spaced apart from the inclined plane 12s. Thus, the imaging optical system 50 moves toward the object by a distance corresponding to the step and is set at the focal position for macro-photographing.

Three inclined planes 12s are formed on the inner surface of the external frame member 12 at three locations to correspond to the notches formed in the pedestal 6. Since the inclined planes 12s render the pedestal 6 non-pivotal, the convex 12e shown in Fig. 3 is unnecessary. The notches in the pedestal 6 are formed for the cam shapes respectively, i.e., at every 40°, and used for selection among the cam shapes A, B, and C in the circumferential direction of the pedestal 6 with respect to the external frame member 12.

The imaging optical system 50 is assembled in the following manner. That is, of the three types of cam shapes described above, if the distance from the final surface to the focal position of the imaging optical system 50 falls within about a designed value, the projections 3a of the third lens abut against the cam shapes B. If the distance from the final surface to the focal point of the imaging optical system 50 is smaller than the designed value, the projections 3a of the third lens abut against the cam shapes A. If the distance from the final surface to the focal position of the imaging optical system 50 is larger than the designed value, the projections 3a of the third lens 3 abut against the cam shapes C.

While the three types of cam shapes are formed on the pedestal 6, the number of types of the cam shapes is not limited to three. Also, the pivot angle of the imaging optical system 50 is appropriately set in accordance with the number of cam shapes.

Figs. 10A and 10B are respectively sectional views showing two shape examples of the compression coil spring to be applied to the imaging apparatus described in each of the embodiments of the present invention.

A compression coil spring 9 shown in Fig. 10A has a terminal end 9m which is bent. A compression coil spring 9 shown in Fig. 10B is machined such that that surface of the wire stock of the spring which comes into contact with a member to be biased is flat.

When the end portion of the coil spring is machined in this manner so it will not come into contact with a portion that receives the biasing force of the imaging optical system, the contact portion operates smoothly, and dust can be prevented from being produced by wear of the contact portion. Then, the washer described above can be eliminated.

When the compression coil spring is wound in the same direction as the pivot direction in which the imaging optical system moves to separate from the imaging element 8, if the end portion of the compression coil spring is not caught in the pivoting direction along which the biasing force increases, the washer can be eliminated.

In the imaging apparatus according to each of the first to third embodiments described above, the imaging optical system 50 has three lenses. However, the present invention is not limited to this, but can naturally be applied to either a lens arrangement comprising a single lens or a lens arrangement comprising a plurality of lenses. The imaging optical system 50 is moved integrally (entire lens group extending arrangement). If the imaging optical system 50 has a plurality of lenses, the present invention can be applied to an arrangement (front lens group extending arrangement) in which lenses are formed on the pedestal 6 and an optical system arranged in front of the pedestal is moved. In the case of front lens group extension, macro-photographing can be performed with a smaller moving amount than in entire lens group extending arrangement.

In the imaging apparatus according to each of the first to third embodiments, the elastic member is exemplified by a compression coil spring. However, the present invention is not limited to this. A leaf spring or sponge-like member may also be employed. Also, the imaging optical system may naturally be brought into abutment with the pedestal by using a tensile coil spring. Also, the portion which is to be urged by the elastic member is exemplified by the flange of the third lens. If the first or second lens is urged by the elastic member, naturally, such arrangement does not depart from the present invention.

Regarding the infrared cut filter 7 described in each of the first and third embodiments, a pedestal may be formed of a transparent material to cover the imaging element 8 and be coated with a material having infrared cutting characteristics. When an infrared cut functional member is arranged in or behind the optical system in this manner, the thickness of the entire imaging apparatus can be decreased more than in a case wherein the infrared cut functional member is arranged on the front surface of the imaging optical system 50. If the pedestal is integrally molded with a flat plate portion which is made of a transparent material to cover the upper surface of the imaging element 8 and an infrared cut filter is arranged in front of the first lens, such arrangement does not depart from the present invention.

## Claims

1. An imaging apparatus **characterized by** comprising an imaging element, a pedestal integrally having a leg portion which abuts against said imaging element, an imaging optical system which has an abutting portion to abut against said pedestal and guides object light to an imaging region of said imaging element, an external frame member which contains said imaging optical system, and an elastic member,
wherein said elastic member is arranged to bias said imaging optical system and pedestal toward said imaging element, and when any one of said pedestal and imaging optical system is pivoted via a cam surface comprising a plurality of inclined planes, or inclined planes and horizontal planes, formed on a surface of at least one of said pedestal and imaging optical system at said abutting portion, said imaging optical system is moved along an optical axis.

2. An imaging apparatus **characterized by** comprising an imaging element, a pedestal integrally having a leg portion which abuts against said imaging element, an imaging optical system which has an abutting portion to abut against said pedestal and guides object light to an imaging region of said imaging element, an external frame member which contains said imaging optical system, and an elastic member which biases said imaging optical system toward said imaging element,
wherein said pedestal constitutes at least part of said external frame member, and when said imaging optical system is pivoted via a cam surface comprising an inclined plane, or an inclined plane and horizontal plane, formed on a surface of at least one of said pedestal and imaging optical system at an abutting portion, said imaging optical system is moved along an optical axis.

3. An imaging apparatus **characterized by** comprising an imaging element, a pedestal integrally having a leg portion which abuts against said imaging element, an imaging optical system which has an abutting portion to abut against said pedestal and guides object light to an imaging region of said imaging element, an external frame member which contains said imaging optical system, and an elastic member,
wherein said elastic member is arranged to bias said imaging optical system and pedestal toward said imaging element, and said pedestal is formed such that when said imaging optical system is pivoted via a cam surface comprising a plurality of steps formed on a surface of said pedestal on a side of an abutting portion with respect to said imaging optical system, and an inclined plane formed on an inner surface of said external frame member at a position to correspond to said step, said imaging optical system is moved along an optical axis.

4. An imaging apparatus according to claim 1, **characterized in that** said imaging optical system comprises a plurality of optical members, and said optical members abut against each other.

5. An imaging apparatus according to claim 1, **characterized in that** said pedestal is formed with part of an optical member that constitutes said imaging optical system.

6. An imaging apparatus according to claim 1, **characterized in that** said pedestal is integrally molded with a flat plate portion.

7. An imaging apparatus according to claim 1, **characterized in that** said pedestal is formed with an infrared cut filter.

8. An imaging apparatus according to claim 1, **characterized in that** said elastic member comprises a coil spring, and said coil spring comes into contact with said imaging optical system at a portion other than an end face of said coil spring.

9. An imaging apparatus according to claim 1, **characterized in that** said elastic member comprises a coil spring, and said coil spring is wound in the same direction as a pivot direction in which said imaging optical system moves to separate from said imaging element.

10. An imaging apparatus according to claim 1, **characterized in that** said elastic member comprises a coil spring, and a washer is arranged between said coil spring and said imaging optical system which is urged by said coil spring.

11. An imaging apparatus according to any one of claims 1 to 3, **characterized in that** said pedestal has an annular shape.

12. An imaging apparatus according to any one of claims 1 to 3, **characterized in that** said elastic member is arranged between said imaging optical system and a lid member which is fixed to said external frame member.

13. A mobile terminal **characterized in that** an imaging apparatus according to claim 1 is mounted.

14. A mobile terminal **characterized in that** an imaging apparatus according to claim 2 is mounted.

15. A mobile terminal **characterized in that** an imaging apparatus according to claim 3 is mounted.

16. An imaging apparatus assembling method comprising the steps of fixing an external frame member to a board having an imaging element, fitting a pedestal in the external frame member, placing an imaging optical system on the pedestal, placing an elastic member on an imaging optical system, and fixing a lid member to the external frame member while urging the other end of the elastic member.

17. An imaging apparatus assembling method according to claim 12, **characterized in that** in the step of fitting the pedestal in the external frame member, a phase of the pedestal in a circumferential direction with respect to the external frame member is selected, and the pedestal is fitted.
